# EUROPEAN PATENT APPLICATION

(11) **EP 2 284 756 A2**
(43) Date of publication of application: **16.02.2011**
(21) Application number: 10183564.3
(22) Date of filing: 18.05.2006
(51) Int. Cl.: G06F 21/00

(54) **Method for managing digital content, management unit and rendering device**

(62) Divisional of application: 06010250.6
(71) Applicant: Vodafone Holding GmbH, 40213 Düsseldorf (DE)
(72) Inventor: Koraichi Najib, 6333, CT Schimmert (NL); Montaner, Javier, 3211, GD Maastricht (NL)
(74) Representative: Müller & Schubert

(57) **Abstract**

The present invention relates to a method for managing the usage of digital content in a system comprising at least one rendering device (3), at least one user key (6) associated to a user of the system (1) and to at least one rendering device (3) as well as at least one management unit (2). The Method is **characterized in that** the management unit (2) can communicate to the rendering device (3) and the user key (6) and the management unit (2) stores information relating to licenses relating to the content sorted by user. The invention also relates to a management unit (2) and a rendering device to be used for the inventive method.

## Description

The present invention relates to a method for managing the usage of digital content, to a management unit and to a rendering device.

Typical DRM (digital rights management) systems encrypt content items to prevent their use by unauthorized users. The content encryption key (CEK) is only distributed to authorised users, and more specifically to devices that belong to those users. When a user wants to buy a piece of digital content, he first contacts the digital rights issuer (RI), pays for the content and then the RI downloads the CEK together with content usage rules to his device or to his set of devices. From this moment the user can render the content on his devices. However, this approach does not allow the user to render his purchased content on other devices, different from his predefined set of owned devices. The user can for example not play his MP3 tracks on his friend's DVD player.

In order to overcome these problems domain structures have been suggested. One domain structure is for example described in WO 2002/086725 A1. In this domain structures a domain authority is provided that manages devices belonging to the domain. The domain authority is responsible for registering or adding and unregistering or removing user devices from the one or more domains. The domain authority adds a device to a domain by first checking to make sure the device is legitimate. Legitimate user devices can be detected because only they will have access to the proper certificates and keys. Once a device is deemed authentic, the domain authority will send the user device the proper keys, certificates, and commands needed to enrol it into a domain. The domain authority can also remove devices from a domain by sending the user device a command to delete its domain data. Finally, the domain authority is responsible for restricting the number of user devices allowed in a domain and for monitoring for the fraudulent enrolment and removal of devices.

This domain approach is disadvantageous in that once a device has been added to a domain, the domain authority has no control over the actual usage of content on the device. The usage of content on the device will be monitored or restricted by keys implemented in the content.

Some DRM systems, however, define usage rules that express how the user can use his purchased content. For example the usage of content can be limited to a maximum number. These rules are based on so-called stateful rules that require maintaining a state, that is, information about how the content has been used so far. For example the number of times the content has been played has to be tracked. This type of stateful usage rules cannot be used if the rights/rules are replicated on several devices.

The problem underlying the present invention is thus to provide a method and entities that allow for a flexible and secure management of digital content.

The present invention is based on the finding that this problem can be solved by providing complementary monitoring facilities for the usage of content, wherein one monitoring facility is a central unit in communication with the remaining monitoring facilities.

According to a first aspect of the invention, the problem is solved by a method for managing the usage of digital content in a system comprising at least one rendering device, at least one user key associated to a user of the system and to at least one rendering device as well as at least one management unit. The method is **characterized in that** the management unit can communicate to the rendering device and the user key and the management unit stores information relating to licenses relating to the content sorted by user.

The management unit will act as a central manager for the DRM protected content of the user. The management unit will therefore hereinafter also be referred to as DRM Hub or Licensing Hub (LH). For managing the DRM protected content the management unit will have information about the user, in particular a user identity (user ID) and a user key as well as about licenses owned by the user. In addition the management unit will preferably have information about the identities of the devices used by the user and the method to communicate with those devices. Finally the management unit will preferably also keep information about not-owned devices that the user still uses frequently, for example a friend's DVD player, or sporadically, for example his work colleague's TV set.

By providing such a central management unit and enabling the management unit to communicate with two entities of the system, information, in particular license information can selectively be transmitted to the appropriate entity. In addition, the inventive method allows for at least part of the information available on the management unit to be duplicated to at least one of the other entities. This provides additional security and flexibility, especially in cases, where the management unit is a remote unit and the network for communication with the management unit may not be available.

As the information relating to licenses, which is stored on the management unit, is sorted by users, the actual usage of the licenses owned by the specific user can be monitored and managed from the management unit.

According to one embodiment of the invention, the management unit updates license information upon receipt of information from the rendering devices or the user key. A license generally comprises a decryption key as well as licensing policies. In cases where the licensing policy include stateful rules, e.g. rules or policies restricting the usage of the digital content to a specific number of uses, the rendering device may transmit the information that the content is being rendered to the management unit and the management unit may update its entry for that specific license.

In another case the rendering device may transmit the information that the content is being used to the user key. This case is in particular useful, if the management unit is unavailable. Once the management unit becomes available again, the user key may transmit the information about the usage of the digital content or an updated license state to the management unit. In the latter case the management unit synchronizes the entries relating to licenses of one specific user upon receipt of a signal from a user key with information stored in the user key.

The state of the license or the usage of the license may also be stored on the rendering device itself and, when connectivity to the management unit becomes available this information can be uploaded to the management unit.

Hence, it becomes possible with the present invention to also monitor stateful license policies, even if a network to communicate to the management unit is temporarily not available.

The present invention in addition allows a new way of sharing digital content, without putting the observance of license policies at risk. This sharing of digital content may be realised by pushing the rights or license necessary to render a piece of digital content to an entity associated to a different user. In that case the management unit, upon receipt of a request to transmit a license to a user key different to the user key of the owner of the license, transmits or forwards the license to the user key or to a central management unit associated to the different user. Such a sharing can be realized as the user may configure his entry in the management unit may to define sharing possibilities. In particular, the user may specify, which other users, using the same or even a different management unit, may use his licenses and to which extend. In addition the license policies may include regulation on whether the license is to be shared or not.

Once the management unit has transmitted the license to the user key of a different user, the management unit will monitor both the user key of the original user and the user key to which the license has been transmitted. Monitoring in this case means communicating with the user key and updating or synchronizing information dependent on the information received from the user keys. This way of proceeding is advantageous in that, even though the license is shared, the state of the license can be observed centrally by the management unit.

When protected, in particular encrypted, digital content is received at a rendering device, rendering thereof will not be possible without the appropriate license. Before rendering the content, the rendering device will therefore first check whether such a license is available on the rendering device. According to one embodiment of the invention in absence of a license to render a specific content on the rendering device, the rendering device transmits a request for a license to a user key associated to the rendering device. The user key, which can communicate with the management unit will provide the license information, in particular the decryption key to the rendering device and will update the state of the license. If a request for license information is received at the user key and no respective license is stored on the user key, the present invention provides the following procedure. The user key in absence of a license requested by a rendering device transmits a license request to the central management unit. Alternatively it also lies within the scope of the present invention that the user key issues an order to the rendering device to forward the request to the management unit.

Preferably the user key stores information on the state of a specific license. When the management unit is available this information may simply be forwarded to the management unit from the user key. In order to ensure the monitoring of the state of the license, also in cases where the management unit is not available or suddenly becomes unavailable, it is preferred to store the information on the user key. The stored state information of a specific license may then be transmitted to the management unit.

According to one embodiment a licensing system upon purchase of a license by a user transmits the license to both the user key and the central unit managing the specific user's licenses. With this distribution of the license to both entities of the system the synchronization of the state of the licenses becomes possible from the beginning. In addition, the license may be used from the beginning, even if the management unit may temporarily not be available.

According to a further aspect of the invention a management unit for managing digital content in a system comprising at least one rendering device and at least one user key is provided. The management unit is **characterized in that** it comprises storage means for storing license information sorted by user. By storing the licenses for each user separately, several users may work the same management unit. With the sorted storing of license information, it is also possible to securely maintain the present status of a license for a specific user.

The management unit is a unit on the network side or on the user side of a telecommunication network. In particular the management unit may be located in the home of the user or hosted by a service provider or a network operator.

According to another aspect of the present invention a rendering device for rendering digital content is provided, which comprises means for transmitting a license request to an external unit and receiving means for receiving and processing received information. The transmitting and receiving means may be realized by an interface, e.g. Bluetooth interface. The processing may be performed in a separate processing unit.

With the present invention the possibility of secure yet flexible handling of digital content is provided.

In the case of stateful rights or licenses the management unit can be the centralised point where the state of the license is maintained. In cases where there is no network connectivity to the management unit or the delay in using the network is not acceptable for users, the state can be controlled locally in the rendering device. Preferably the local state of the license will later be uploaded to the management unit. A secure token, such as a smart card, can be used as the representative of the management unit towards the local environment. That means a mobile device and rendering devices of a user may locally connected to it. The user key can also be realized as a smart card, which can be used to contact the management unit of the user to retrieve his content rights or licenses in a secure way. Thereby misuse and fraud of the content by third parties can be avoided. Other types of portable security tokens can be used instead of the smart cards.

Also an enhancement for the management of stateful rights is possible with the present invention. It is proposed that the state of stateful rights is stored and controlled through the user key, which could be the user's smart card. Rendering devices must contact the user key every time they want to render content protected by stateful rights. The token will check its stored state and if correct, will only provide permission to render the content one time for a limited period of time. The state kept in the user key will be updated accordingly.

A smart card can also be used in the management unit to implement the secure protocols and potentially to provide wireless GSM/GPRS/3G network connectivity if a SIM/UICC card is used. The management unit can be implemented in a device that is physically delivered to the user or as a network entity maintained by a service provider.

The management unit can also be used by a community (e.g. a family) to share the content among all the community members. The user's tokens allow the management unit to distinguish between the different users. This way users may still decide with whom and what they share.

If the management unit is implemented using a (U)SIM, the mobile operator can provide services to every user, even those who are not mobile subscribers. The control and security supported by the (U)SIM in this solution provides an enhanced user experience and allows or new ways of using and purchasing content.

Advantages and features described with respect to the inventive method also apply to the inventive management unit and the inventive rendering device, where applicable, and vice versa.

The present invention will now be described again, with reference to the enclosed figures, wherein:
Figure 1 shows a system with an embodiment of the inventive rendering device and the inventive management unit;
Figure 2 shows a schematic view of the information stored on a management unit;
Figure 3 shows a schematic view of the information stored on a user key; and
Figure 4 shows a schematic view of the information stored on a rendering device.

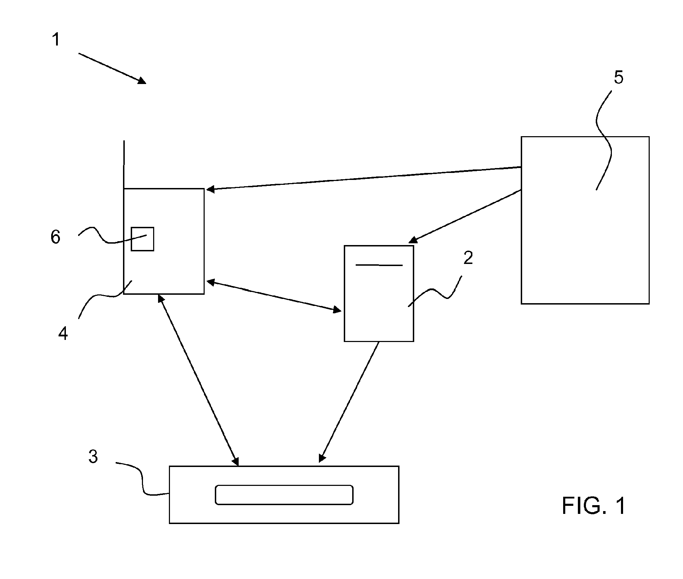

In Figure 1 the system 1, wherein the digital content is to be managed is shown. The system 1 comprises a management unit, which is hereinafter referred to as License Hub (LH) 2, a rendering device, which is depicted as a DVD player 3, but may be any rendering device for audio, video, text or software applications, a mobile device, represented as a mobile phone 4, and a Licensing System 5. The mobile phone 4 comprises a User Key 6, which may be a SIM card. The Licensing System 5 creates and distributes licenses for digital content. The License Hub 2 is an entity, for example a server that helps in the management of licenses for a number of users and devices. The User Key 6 is an entity that allows the user to use his licenses on a specific device whenever he wants (provided that the license allows the desired usage mode on that specific device).

Every License Hub 2, User Key 6 and rendering device 3 can be unequivocally identified or authenticated through a unique cryptographic key.

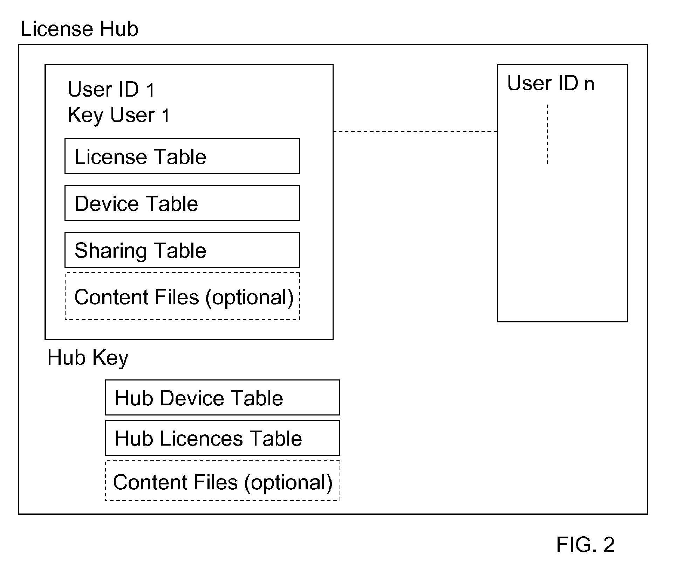

Within the License Hub 2 all licenses of the users associated to this License Hub 2 are stored. This is schematically shown in Figure 2. This information is stored sorted by user. For distinguishing the users hosted by the License Hub 2, a User ID as well as the User Key 6 for each user is registered. The licenses can be stored in a license table. In addition to the license table a device table and a sharing table are stored for each user in the shown embodiment. In the device table, all devices associated to the respective user are listed. The sharing table will comprise information on other users that shall be entitled to use the licenses. Also the extent to which the licenses shall be used by the other user may be listed in the sharing table. Finally also the devices which the content may be shared with, can be listed in the sharing table. Optionally also the content owned by the user may be stored in the License Hub 2, as shown in Figure 2 by the dashed box. Each entry for a user may comprise these lists and optionally the content files. On the License Hub 2, the users may also be grouped. For example all family members or all members of a R&D department could be merged to one user group.

In addition, the License Hub 2 may comprise a Hub Key, which stores a hub device table, listing the devices managed by the hub, and a hub license table, listing the licenses managed by the License Hub 2.

On the License Hub 2 not only the available licenses for the respective user can be stored. In addition also the state of the license is stored; for example, how many times the content has been rendered. This information is either obtained from the rendering device, e.g. DVD player 3, directly or via the User Key 6, which obtained the information previously from the rendering device.

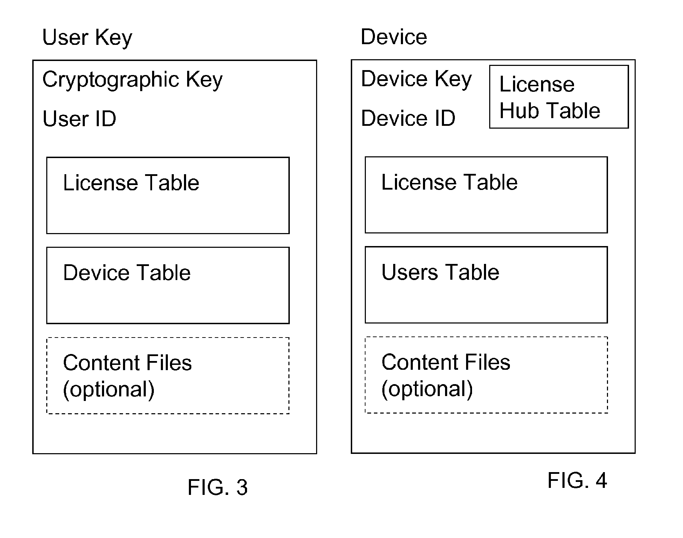

The structure of the information, that may be stored on the User Key 6 is shown in Figure 3. The User Key 6 will have a User ID of the respective user and a cryptographic key individualized for the specific user stored on it. In addition a license table, a device table and optionally content files may be stored. In the device table, the devices associated to the user are listed. The license table comprises information on the licenses owned by the user and potentially also on the state of the individual license.

The structure of the information on the rendering device is schematically shown in Figure 4. A device key and a device ID for distinguishing the device will be stored. In addition tables for License Hubs, Licenses and users may be provided. Also on the rendering device the content files may optionally be stored.

When the DVD player 3 receives digital content, which is protected, the DVD player 3 will require a license in order to be able to render the content. The content can be received at the DVD player 3 by means of physical media, such as a DVD or by means of a connection to a content server, from which the content can be downloaded. Upon receipt of the content or when the content is to be rendered, the DVD player 3 will perform an internal check, to determine whether the required license is available on the DVD player 3 or the physical medium. If no license for the content to be rendered can be found, the rendering device will contact the User Key 6 in the mobile phone 4. On the User Key 6 a check for availability of the license will also be performed and a response will be transmitted to the DVD player 3. If the license is not available on the User Key 6, the User Key 6 or mobile phone 4 will generate an appropriate message to the DVD player 3. Upon receipt of this message, which might include the address of the License Hub 2, the rendering device 3 will contact the License Hub 2 and request the respective license or license information.

As an alternative to the above described process, wherein the rendering device 3 will first contact the User Key 6 if no license is available on the rendering device 3, it is also possible that the rendering device 3 contacts the License Hub 2 directly, if no license is available. Furthermore the User Key 6, if contacted by the rendering device 3, does not have the requested license stored, it may directly contact the License Hub 2. The License Hub 2 will then provide the license either to the User Key 6 or to the rendering device 3.

The transfer of a license from the License Hub 2 to a User Key 6 may also be initiated by the License Hub 2. The License Hub 2 may push information to a User Key 6, if such a sharing of content is registered in the License Hub 2.

The inventive method is not restricted to any specific network architecture, but may be performed on any network system, such as GSM / GPRS / UMTS / WLAN /ADSL / Bluetooth etc. In the invention the network is merely used to connect between the different devices / servers.

The invention will now be explained again by a use modes.

A user purchases licenses from the Licensing System 5.

The licenses can be restricted to a single device or a set of devices or to a single user or a set of users. This is implemented by including the identity of the chosen devices / users in the license. The license might be shared with other users/devices. This will also be indicated in the license. Licenses may also include other usage rules or restrictions indicating how they can be used.

The purchased license is transferred to the User Key 6 and also to the License Hub 2 associated to that user. The information in the User Key 6 and License Hub 2 is always synchronized through the network. If the network is not available, the User Key 6 keeps track of the offline actions and synchronizes to the License Hub 2 when the network is available again and vice versa.

A purchased license can also be transferred directly by the Licensing System 5 to a device 3 without or in addition to storing it in the User Key 6 and/or License Hub 2.

When the license to render a specific content is available in the device the following steps will be performed. When the user wants to render content on a specific rendering device 3, the content needs to be available on the device 3. The media could be a CD, DVD a downloaded file, streamed, etc.. The present invention works with all kinds of digital content regardless of the origin of the content. The content may also be stored on the rendering device 3, the User Key 6 or the License Hub 2.

The user may connect his User Key 6 and rendering device 3 using any kind of wired or wireless connectivity (USB, uPnP, Bluetooth, NFC, Zigbee etc.)

The device 3 will check if it already stores a valid license to render the content. If the license is available it will check if the usage rules or license policies are valid. If so rendering will start.

If the condition in the license is restricted to specific users, the device 3 can use the connection to the User Key 6 to validate it. If the authentication is correct, the device 3 will render the content.

If in contrast to the above process the license is not available on the rendering device, it may be obtained from the User Key 6. In that case, if the device 3 has no valid license for the content, the device 3 will contact the User Key 6 and will request the license. If a license is available in the User Key 6, the User Key 6 may identify/authenticate the device to check any device restrictions stated in the license. If this check is o.k., the User Key 6 checks the rest of the usage rules or license policies on the license. If the license is considered valid, the User Key 6 continues with the following step.

The usage rules of the license and/or the configuration of the User Key 6 might require that the license is not transferred as such to the device 3, but just the permission to render/use the content one time. In this case the User Key 6 generates the permission including the Content encryption key (CEK) and transfers it to the device 3 that will render the content.

If the usage rules include stateful information, for example to only render the content three times, play the CD for 30 minutes, etc., the mechanism described in the previous paragraph can be used to make sure that the state is properly managed by the User Key 6. The state will be then synchronised to the License Hub 2 even when the license is used in different devices. In order to support stateful licenses, the system could allow the transfer of stateful licenses to devices 3 but oblige the devices 3 to contact the User Key 6 or the License Hub 2 whenever the license is used.

In cases where no network is available to synchronize User Key 6 and License Hub 2, the User Key 6 can keep a local value of the state of the license or the log of the permissions transferred to different devices. When the License Hub 2 is reachable again, the User Key 6 and the License Hub 2 can synchronise and update the correct license state.

The invention also covers the case when the license is obtained from the License Hub 2. In that case, if no User Key 6 is connected to the device 3 or the User Key 6 connected does not hold a valid license, the device 3 might try to connect to one License Hub 2 either preconfigured in the device 3 or to a License Hub 2 whose identity/address is input manually by the user. The same process as in the case when license is obtained from the User Key 3 would apply. The state management can also be provided by the License Hub 2.

If neither the User Key 6 nor the License Hub 2 is reachable from the device 3, the behaviour of the device 3 is up to the policy indicated in the license usage rules. In that case the license must be available in the device 3. A log of the "offline" actions can be kept by the device 3 and transmitted to the User Key 6 or the License Hub 2 when they become available again.

User Key 6 and License Hub 2 can also push licenses to devices 3 even before the user tries to render a specific piece of content. This could for example be the case, when a user obtains a license for an mp3 music track from the Licensing System 5 using his mobile phone 4. The User Key 6 and the License Hub 2 will receive and synchronize their copy of the license. At this moment the User Key 6 and/or the License Hub 2 can push a copy of the license to the device 3 owned by the user, for example his stereo system at home. A restriction can be added to these "device" licenses that will require the device to contact the User Key 6 or the License Hub 2 before they can be used. Revocation of licenses can also be executed with the same mechanism.

The proposed solution also allows two ways of sharing content with other users. Firstly, a license can be pushed to a device without any restriction about user identities. In this case anyone can render the content. Secondly, it is possible to share licenses through the License Hub 2. A user can configure his License Hub 2 to share all his licenses (or part of his licenses) with other users that use the same License Hub 2. Before this sharing is allowed, the License Hub 2 will check that the Licensing System 5 does allow the sharing of the content/license between different users. This can be indicated in the usage rules of the license. If the check is o.k., the License Hub 2 will push the licenses from the original owner to the User Key 6 of the second user. Stateful licenses can still be maintained, but the License Hub 2 will now synchronise two different User Keys 6. It is even possible to achieve this sharing between users whose User Keys 6 are associated with different License Hubs 2.

As stated before, the Licensing System 5 can restrict the type of sharing that is allowed through usage rules associated with every license.

Most of the functionality of the User Key 6 can be implemented using a smart card that in the case of a mobile operator can be a SIM card. The license hub can be located in the home of a user or hosted by a service provider / operator. Most of is functionality can also be implemented using a smart card.

## Claims

1. Method for managing the usage of digital content in a system comprising at least one rendering device (3), at least one user key (6) associated to a user of the system (1) and to at least one rendering device (3) as well as at least one management unit (2), **characterized in that** the management unit (2) can communicate to the rendering device (3) and the user key (6), **in that** the rendering device can contact the user key (6) and **in that** the management unit (2) stores information relating to licenses relating to the content sorted by user.

2. Method according to claim 1, **characterized in that** in absence of a license to render a specific content on the rendering device (3), the rendering device (3) transmits a request for a license to a user key (6) associated to the rendering device (3).

3. Method according to any of claims 1 or 2, **characterized in that** the user key (6) in absence of a license requested by a rendering device (3) transmits a license request to the central management unit (2).

4. Method according to anyone of claims 1 or 2, **characterized in that** the user key (6) in absence of a license requested by a rendering device (3) transmits a message to the rendering device, which includes the address of the management unit (2).

5. Method according to claim 4, **characterized in that** the rendering device (3) upon receipt of the message form the user key (6) contacts the management unit (2) and requests the respective license or license information.

6. Method according to claim 1, **characterized in that** in absence of a license to render a specific content on the rendering device (3), the rendering device (3) contact the management unit (2).

7. Method according to claim 6, **characterized in that** the management unit (2) provides the requested license to the rendering device (3).

8. Method according to claim 1 to 3, **characterized in that** the management unit (2), upon receipt of a request to transmit a license to a user key (6) different to the user key (6) of the owner of the license, transmits or forwards the license to the user key (6) or to a central management unit (2) associated to the different user.

9. Method according to claim 8, **characterized in that** the management unit (2) upon transmittal of the license to the user key (6) of the different user, monitors the user key (6) of the different user in addition to the user key (6) of the user who requested the transmittal.

10. Method according to any of claims 1 to 9, **characterized in that** the user key (6) stores information on the state of a specific license.

11. Method according to claim 10, **characterized in that** the user key (6) transmits the stored state of a specific license to the management unit (2).

12. Method according to any of claims 1 to 11, **characterized in that** a licensing system (5) upon purchase of a license by a user transmits the license to both the user key (6) and the central unit (2) managing the specific user's licenses.

13. Management unit for managing digital content in a system comprising at least one rendering device (3) and at least one user key (6), **characterized in that** the management unit (2) comprises storage means for storing license information sorted by user.

14. Management unit according to claim 13 **characterized in that** the management unit (2) is a unit on the network side or on the user side of a telecommunication network.

15. Rendering device for rendering digital content, **characterized in that** the rendering device (3) comprises means for transmitting a license request to an external unit (6, 2) and receiving means for receiving and processing received information.
